# EUROPEAN PATENT APPLICATION

(11) **EP 2 410 506 A1**
(43) Date of publication of application: **25.01.2012**
(21) Application number: 09841680.3
(22) Date of filing: 26.11.2009
(51) Int. Cl.: G09F 9/302, G09G 3/32, G09G 3/36, H04N 5/74

(54) **DEVICE FOR ELIMINATING SCREEN SPLICING FRAMES**

(30) Priority: 20.03.2009 CN 200920069185 U
(71) Applicant: Xia, Zhanmin, Shanghai 200060 (CN); Ding, Weikang, Shanghai 200072 (CN)
(72) Inventor: Xia, Zhanmin, Shanghai 200060 (CN); Ding, Weikang, Shanghai 200072 (CN)
(74) Representative: Barth, Stephan Manuel
(86) International application number: PCT/CN2009/001322
(87) International publication number: WO 2010/105395

(57) **Abstract**

This invention provides a display device for achieving seamless splicing of display screens. The invention comprises several screens spliced in array, wherein a display belt frame is provided on the frame of each screen; the screen and said display belt frame form an integral display plane; a processing circuit that splits the original display plane into the screens and the display belt frames links each of the screens and the display belt frames, said display belt frame being composed of LEDs or OLEDs, and said processing circuit being composed of a video processing card that splits the video images, an LCD/PDP drive circuit and an LED/OLED drive circuit. The advantage of this invention is that it can sufficiently utilize the advantages of both LCD/PDP and LED/OLED and thus eliminate the frames formed during the splicing of several smaller display screens into one larger display screen.

## Description

### Field of Technology

This invention relates to a device for eliminating splicing frames of a display, and especially the technology for a display device that may achieve seamless splicing of the display screen.

### Background of the Technology

Presently, prevalence of one-piece LCD/PDP over 80 inches in size can not be achieved due to the huge amount of investment required for the display technology, the low rate of finished product, the high price and the difficulty in transportation, and further because of the restrictions in the aspects of the technology, device and raw materials. Therefore, when a large-size display screen is needed, LED is usually adopted.

The biggest restriction on the display technology for large-size LED lies in the low resolution - the pitch of an LED is generally between 10mm to 4mm, which is usually referred to as P10∼P4; compared with the 0.5mm pitch of an LCD and the 1.0mm pitch of a PDP, the display effect of an LED is not satisfactory. Meanwhile, due to the non-permanence of the point of sight (i.e., slight movements of human bodies), the highlight points and the dim points alternate on the retina and cause a visual burden, tiredness or even hurts to the human eyes. Currently, the minimum pitch adopted for the display of LED is 3mm, by which the display effect has been improved; however, to achieve such a pitch, 111,111 RGB LEDs will be needed for one square meter, so the price, power consumption and heat dissipation will be the largest obstacle.

Obviously, it will be difficult to adopt an indoor LED for short-distance and long-time watching. However, indoor display screens over 80 inches in size are still needed in places such as waiting halls of airports. The most common way is to splice pieces of small-size HD LCDs/PDPs together. Because of the frames of the display screens, obvious interval gaps will exist after the splicing and form black frames on the large-size screen. Although special seamless PDPs are now available for the splicing, their price is higher while their life span is shorter. Further, LCD theoretically can not achieve the seamless display at all. Although improved narrow-frame LCDs/PDPs may improve the splicing display effect to a large extent, the splicing frames still can not be absolutely eliminated. Moreover, other forms of large-size digital projection are restricted by projection space, display brightness and uniformity of the brightness. Meanwhile, a projection display device requires high brightness light source, and its shorter life span generally will not exceed 10,000 hours, less than 1/3 of that of an LCD.

OLED is a new display technology currently in the laboratories and sample devices are available at the moment. However, the large-size display and commercialization of the OLED still needs some time - it is estimated that OLED will need about five years for its gradual development into the market, and that OLED will parallel with LCD/PDP on the market for a considerably long period.

### Brief Summary of the Invention

The purpose of this invention is to solve the problem that can not be solved by the existing technologies, i.e., when smaller screens (below 80 inches) are spliced to form a larger screen, the splicing frames can not be eliminated, by providing a device for eliminating said splicing frames of the display screen. The device for eliminating the splicing frames of a display screen designed by this invention as defined in claim 1 comprises several screens spliced in array, wherein a display belt frame is provided on the frame of each screen; the screen and said display belt frame form an integral display plane; a processing circuit that splits the original display plane into the screens and the display belt frames links each of the screens and the display belt frames, said display belt frame being composed of LEDs or OLEDs, and said processing circuit being composed of a video processing card that splits the video images, an LCD/PDP drive circuit and an LED/OLED drive circuit. The advantage of this invention is that it can sufficiently utilize the advantages of both LCD/PDP and LED/OLED and thus eliminate the frames formed during the splicing of several smaller display screens into one larger display screen. When
a) Lattice of the LED is 2 x 2 mm;
b) Lattice of the LCD is 0.485 x 0.485 mm;
c) Resolution of the LCD is 1920 x 1080; and
d) Splicing of the LCD is 4 x 4,
the actual display lattices of them will be very close. Meanwhile, since the LED/OLED is only provided on the frames, problems incurred by the use of high-density LEDs such as high price, power consumption, heat dissipation and current difficulty in manufacturing large-size OLED can be avoided; currently available display screens below 80 inches in size can be sufficiently utilized for optional splicing, to form an integral display screen over 100 inches or even several hundred inches in size.

### Explanations by Appended Drawings

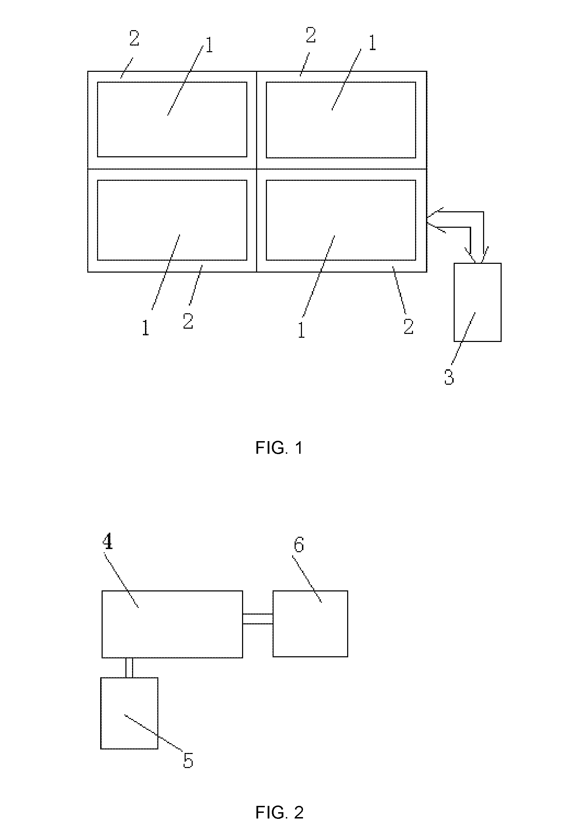

FIG. 1 is a schematic representation of an embodiment of this invention.
FIG. 2 is a schematic representation of the processing circuit of an embodiment of this invention.

### Method of Implementing the Invention

Detailed explanations about embodiments of this invention are given below by combining the appended drawings and the examples.

The drawings include several screens (1) spiced in array, wherein a display belt frame (2) is provided on the frame of each screen (1); the screen (1) and the display belt frame (2) form an integral display plane; a processing circuit (3) that splits the original display plane into the screens and the display belt frames links each of the screens (1) and the display belt frames (2), said display belt frame (2) being composed of LEDs or OLEDs, and said processing circuit (3) being composed of a video processing card (4) that splits the video images, an LCD/PDP drive circuit (5) and an LED/OLED drive circuit (6).

When this embodiment of the invention is specifically implemented, it first splits the original display plane into the LCD display screen section and the LED display belt frame section by the video processing card, and then the displays the video on the LCD screen and the LED display belt frames respectively through the LCD drive (card) and the LED drive (card), so that an integral image consistent with the original image will be formed. When each of the spliced frames is displaying in the above way, the complete display array will form an integral seamless larger size display screen.

When
a) Lattice of the LED is 2 x 2 mm;
b) Lattice of the LCD is 0.485 x 0.485 mm;
c) Resolution of the LCD is 1920 x 1080; and
d) Splicing of the LCD is 4 x 4,
the actual display lattices of them will be very close. Meanwhile, since the LED/OLED is only provided on the frames, problems incurred by the use of high-density LEDs such as high price, power consumption, heat dissipation and current difficulty in manufacturing large-size OLED can be avoided; currently available display screens below 80 inches in size can be sufficiently utilized for optional splicing, to form an integral display screen over 100 inches or even several hundred inches in size.

## Claims

1. A device for eliminating splicing frames of a display screen, comprising several screens spliced in array, wherein a display belt frame is provided on the frame of each screen; the screen and said display belt frame form an integral display plane; a processing circuit that splits the original display plane into the screens and the display belt frames links each of the screens and the display belt frames.

2. A device for eliminating splicing frames of a display screen of claim 1, wherein said display belt frame is composed of LEDs or OLEDs.

3. A device for eliminating splicing frames of a display screen of claim 1, wherein said processing circuit is composed of a video processing card that splits the video images, an LCD/PDP drive circuit and an LED/OLED drive circuit.
